# FASCICULE DE BREVET EUROPEEN

(11) **EP 2 541 735 B1**
(45) Date de publication et mention de la délivrance du brevet: **08.05.2019**
(21) Numéro de dépôt: 12172878.6
(22) Date de dépôt: 21.06.2012
(51) Int. Cl.: H02K 1/22, H02K 3/52, H02K 1/24, H02K 21/02

(54) **Rotor d'une machine électrique synchrone multipolaire à pôles saillants**
Rotor einer multipolaren elektrischen Synchronmaschine mit Schenkelpolen
Rotor of a multipolar synchronous electric machine with salient poles

(30) Priorité: 29.06.2011 FR 1155840
(43) Date de publication de la demande: 02.01.2013
(73) Titulaire: Jeumont Electric, 59460 Jeumont (FR)
(72) Inventeur: Ammar, Brahim, 95380 Louvres (FR); Letourneur, Patrick, 59460 Jeumont (FR)
(74) Mandataire: Lebkiri, Alexandre

(56) Documents cités:
- EP-A1- 0 008 250
- DE-A1-102007 032 140
- FR-A1- 2 931 316
- US-A- 4 274 027
- US-A1- 2011 140 567

## Description

La présente invention concerne le domaine des machines tournantes électriques synchrones de hautes performances électriques comprenant un ensemble statorique et un ensemble rotorique, l'ensemble rotorique pivotant par rapport à l'ensemble statorique autour d'un axe de rotation.

Plus particulièrement, la présente invention concerne un rotor d'une machine électrique synchrone multipolaire de type hétéropolaire, comportant une pluralité de pôles saillants et d'épanouissements polaires.

D'une façon générale, les rotors à pôles saillants ont des pôles inducteurs situés à la périphérie d'une couronne du circuit magnétique.

Ces rotors sont généralement utilisés dans les applications à vitesse lente jusque 1200 tr/min en pôles feuilletés et 1800 tr/min en pôles massifs.

De façon connue, le rotor d'une machine électrique synchrone à pôles saillants comporte :
- une partie centrale formée par la couronne du circuit magnétique et par un arbre central ; pour les rotors de faible diamètre l'arbre central et la couronne du circuit magnétique ne forment qu'une seul pièce ;
- des pôles saillants ou pôles formés par une partie centrale appelée corps de pôle ou indifféremment corps polaire et d'une partie périphérique appelée épanouissement polaire ; chaque pôle est parcouru, dans sa partie centrale par un flux magnétique constant ; en revanche, à la surface du pôle au niveau d'un épanouissement polaire, l'induction est pulsée par suite de la rotation devant les encoches du stator ;
- des bobines inductrices entourant chaque corps polaire formées par un empilage de spires.

### Un exemple est notamment décrit dans la demande EP 0008250.

Les machines synchrones sont des machines électriques dont la vitesse de rotation de l'arbre de sortie est égale à la vitesse de rotation du champ magnétique. La magnétisation des machines tournantes à pôles saillants est obtenue par l'inducteur formé par les bobines inductrices entourant les corps polaires.

Le flux inducteur total Φₜ de la machine tournante est composé classiquement d'une composante utile (flux utile Φᵤ) embrassé par l'induit (i.e le stator) et d'une composante de dispersion, appelé flux de fuite Φ_{f}. Ces fuites magnétiques présentes dans les machines tournantes sont fortement dépendantes de la géométrie de la machine, et notamment de l'espace interpôles ainsi que du nombre de pôles du rotor.

Afin de réduire ces flux de fuite magnétique entre les pôles magnétiques du rotor, il est connu :
- soit d'augmenter l'espace entre deux pôles ; dans ce cas, le volume et le poids de la machine électrique tournante sont augmentés ce qui pose des problèmes d'encombrement dans certains domaines d'utilisation, tels que par exemple dans le domaine maritime ou encore dans le domaine éolien ;
- soit de diminuer les Ampère-tours, les fuites au niveau du rotor étant proportionnelles à ceux-ci, ce qui revient à un déclassement de la machine et donc à une augmentation notable des coûts.

Les solutions existantes visant à limiter les fuites magnétiques entre les pôles magnétiques au niveau du rotor n'apportent pas une entière satisfaction et ne sont pas des solutions viables vis-à-vis des exigences actuelles, telles que les exigences d'encombrement, de réduction des coûts et d'augmentation du rendement des machines électriques tournantes.

Dans ce contexte, l'invention vise à fournir un rotor de machine électrique tournante à pôles saillants aptes à améliorer les performances des machines électriques tournantes par la réduction de l'impact du flux de fuites magnétiques entre les pôles saillants du rotor tout en répondant aux exigences de compacité et de rendement actuelles.

A cette fin, l'invention propose un rotor d'une machine électrique synchrone selon la revendication 1.

On entend par « apte à compenser les fuites de flux magnétique » l'établissement d'un équilibre magnétique, qu'il soit total ou partiel, par la génération d'un flux magnétique complémentaire contraire au sens des fuites de flux magnétique, le flux magnétique complémentaire, dit de compensation visant à combler au moins une partie des fuites magnétiques de la machine tournante.

L'utilisation d'une source magnétique de compensation permet à des conditions de fonctionnement données avantageusement de limiter le phénomène de saturation magnétique à la base des corps polaires par la suppression d'au moins une partie du flux de fuite participant avec le flux magnétique principal à la saturation du rotor au niveau de la base des corps polaires. Ainsi, l'utilisation d'une source de compensation selon l'invention permet d'optimiser la puissance sans modifier les dimensions du rotor par l'augmentation du flux principal magnétique jusqu'à saturation magnétique admissible.

L'invention permet ainsi d'optimiser le rendement, la puissance fournie d'une machine tournante par la compensation totale ou partielle des fuites de flux magnétique qui sont présentes intrinsèquement dans une machine tournante.

Grâce à l'invention, il est possible de réaliser des machines tournantes plus performantes sans augmentation de leur encombrement, ce qui répond aux tendances actuelles de compacité et d'augmentation de rendement.

L'invention est à différencier des machines synchrones homopolaires ou pseudo-homopolaire dont l'architecture et les exigences d'utilisation sont très différentes des machines synchrones à pôles saillants. En effet de telles machines comportent une unique bobine d'excitation autour d'un noyau axial solidaire de deux disques comportant une succession de dents et d'encoches sur son pourtour externe.

Le rotor de machine électrique synchrone multipolaire, à pôles saillants, selon l'invention peut également présenter une ou plusieurs des caractéristiques des revendications dépendantes 2 à 8.

L'invention a également pour objet une machine électrique synchrone comportant un rotor à pôles saillants selon l'invention.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue partielle et en perspective d'un rotor à pôles saillants d'une machine électrique synchrone selon l'invention ;
- la figure 2 est une vue partielle, en coupe par un plan perpendiculaire à l'axe de rotation du rotor, d'un rotor à pôles saillants selon l'invention ;
- la figure 3 est une vue en perspective d'un exemple de source de compensation magnétique du rotor à pôles saillants d'une machine électrique synchrone illustré à la figure 1 ;

- la figure 4 est une vue de dessus de la source de compensation magnétique illustrée à la figure 3.
- la figure 5 est une vue en coupe de la source de compensation magnétique illustrée aux figures 3 et 4 selon un plan de coupe AA illustré sur la figure 4.

Dans toutes les figures, les éléments communs portent les mêmes numéros de référence sauf précision contraire.

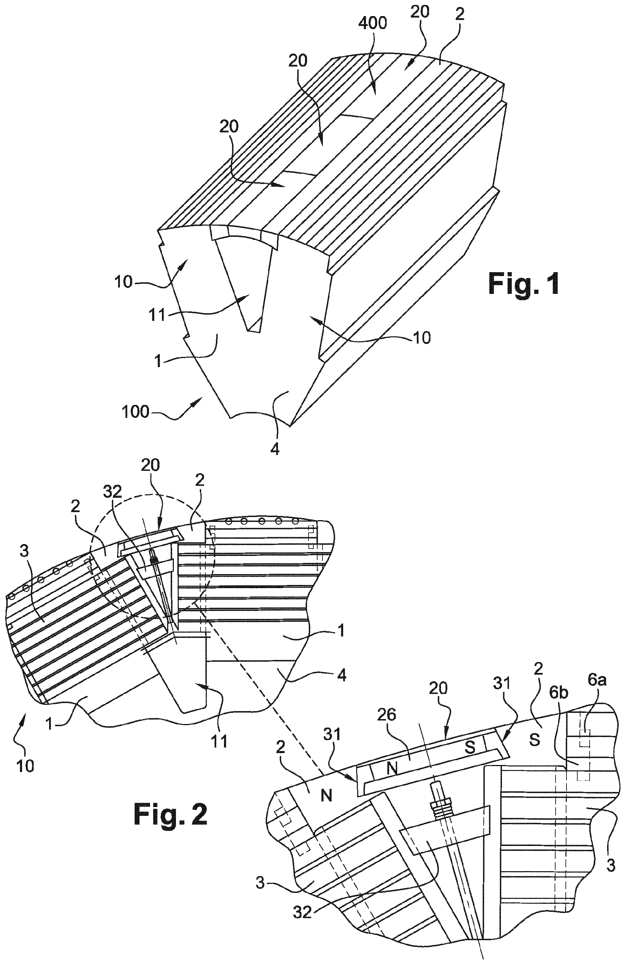

La figure 1 représente une vue partielle, et en perspective, d'un rotor 100 à pôles saillants d'une machine électrique synchrone.

La figure 1 représente plus particulièrement une portion du rotor 100 présentant un espace 11, dit espace inter-polaire, situé entre deux pôles saillants 10 ; la figure 1 ne représentant qu'une portion des pôles saillants 10.

Chaque pôle saillant 10 du rotor 100 est formé par un corps de pôle 1, également appelé corps polaire, entouré par une bobine inductrice 3 (figure 2) ; pour une meilleure lisibilité de la figure 1, la bobine inductrice 3 entourant chaque corps polaire 1 n'est pas représentée sur la figure 1.

Selon le mode de réalisation illustré, le corps polaire 1 est une pièce faisant partie intégrante d'une jante 4 constituant la roue polaire du circuit magnétique de la machine électrique synchrone. La jante 4 est préférentiellement réalisée par un empilement de tôles d'acier magnétique monté à chaud sur un arbre ou un moyeu (non représenté). Selon un autre mode de réalisation le corps polaire 1 est une pièce massive monobloc faisant partie intégrante de l'arbre.

Selon un autre mode de réalisation de l'invention, le corps polaire est une pièce massive, ou une pièce feuilletée, rapportée et solidarisée sur la jante 4, ou sur l'arbre, par des moyens de fixation classiques, tels que des moyens de vissage, des clefs ou encore des queues d'aronde.

La bobine inductrice 3 est réalisée par un conducteur en cuivre de section circulaire ou rectangulaire entourant le corps polaire 1 avec un certain nombre de spires. Les bobines inductrices 3 du rotor 100 forment l'inducteur du rotor et constituent une source de force magnétomotrice apte à générer un flux magnétique Φ.

Des cornes polaires 2 sont situées, par paire, de part et d'autre d'un corps polaire 1 et s'étendent sur toute sa longueur, une seule corne polaire 2 de ladite paire étant représentée sur chaque corps polaire 1.

Les paires de cornes polaires 2 maintiennent en position la bobine inductrice 3 de part et d'autre du corps polaire.

Les cornes polaires sont également une partie intégrante de l'épanouissement polaire et permettent donc l'étalement du flux magnétique au niveau de l'entrefer et leur profil est conçu pour obtenir une onde d'induction d'entrefer proche de la sinusoïde de manière à minimiser les harmoniques d'espace.

Le maintien tangentiel de la bobine inductrice 3, lors de la rotation du rotor, est également réalisé classiquement pour des coins de calage 32 positionné dans l'espace inter-polaire 11.

Selon un premier mode de réalisation avantageux de l'invention, les cornes polaires 2 comportent des accroches 6b aptes à coopérer avec des encoches 6a agencées de part et d'autre du corps polaire 1 et s'étendant sur la longueur du corps polaire 1 formant ainsi des conduits de part et d'autre du corps polaire 1.

Les accroches 6b permettent la mise en place des cornes polaires 2 par emboîtage et/ou par glissement dans les encoches 6a des corps polaires 1 sans autre moyen de fixation. L'emboitage s'effectue à partir de chaque extrémité du corps polaire 1 et le glissement suivant le sens longitudinal dudit corps polaire 1. Les accroches 6b ont la forme par exemple d'un crochet.

Ainsi, la forme particulière des accroches 6b permet un maintien radial des cornes polaires 2, et permet d'encaisser les sollicitations occasionnées par la force centrifuge de la bobine inductrice 3 lors de la rotation du rotor, et notamment de la composante radiale.

Selon un autre mode de réalisation de l'invention, les cornes polaires font parties intégrantes d'un épanouissement polaire rapporté et solidarisé sur le corps polaire par des moyens classiques de solidarisation, tels que des moyens de vissage. L'épanouissement polaire est positionné sur le corps polaire lorsque la bobine inductrice est mise en place autour du corps polaire.

Selon un autre mode de réalisation de l'invention, les cornes polaires sont intégrées à l'épanouissement, lui-même intégré au corps polaire, la bobine inductrice étant mise en place autour du corps polaire et clamée radialement entre les faces internes des cornes polaires et des clames vissées dans des logements pratiqués sur la périphérie de la face interne du corps polaire. L'ensemble pôle bobiné est monté par vissage ou clavetage sur la jante.

Le rotor 100 selon l'invention comporte en outre une source magnétique de compensation 400 apte à générer une force magnétomotrice (fmm) complémentaire destinée à compenser au moins partiellement les fuites de flux magnétique Φ_{f} générées intrinsèquement dans la machine tournante lors de la génération du flux magnétique Φ par les bobines inductrices 3.

Selon un premier mode de réalisation de l'invention, cette source magnétique de compensation comporte au moins un électro-aimant.

Selon un deuxième mode de réalisation de l'invention, cette source magnétique de compensation comporte au moins un enroulement inducteur complémentaire, l'enroulement inducteur complémentaire étant différent des enroulements inducteurs formés par les bobines inductrices entourant les corps polaires.

Selon un troisième mode de réalisation particulièrement avantageux de l'invention, cette source magnétique de compensation comporte au moins un aimant permanent 26.

Selon ce troisième mode de réalisation illustré sur les figures, cette source de compensation 400 est formée par une pluralité de pavés de compensation 20 intégrant une pluralité d'aimants permanents 26, les pavés de compensation étant positionnés au niveau de l'espace inter-polaire 11 du rotor 100.

A cet effet, les cornes polaires 2 comportent au niveau de leur extrémité, en regard vers l'espace inter-polaire 11, des rainures 31 aptes à coopérer avec les pavés de compensation 20. La forme des rainures 31 est déterminée en fonction de la forme des pavés de compensation 20. Par exemple, la forme des rainures 31 peut être déterminée de manière à pouvoir recevoir par glissement les pavés de compensation 20 entre deux cornes polaires 2 lorsque le rotor est déjà assemblé.

La forme des rainures 31 est également déterminée de manière à assurer le maintien des pavés de compensation 20 lors de la rotation du rotor 100.

Le détail de la figure 2 illustre particulièrement l'assemblage d'un pavé de compensation 20 entre deux cornes polaires 2 comportant une telle rainure 31.

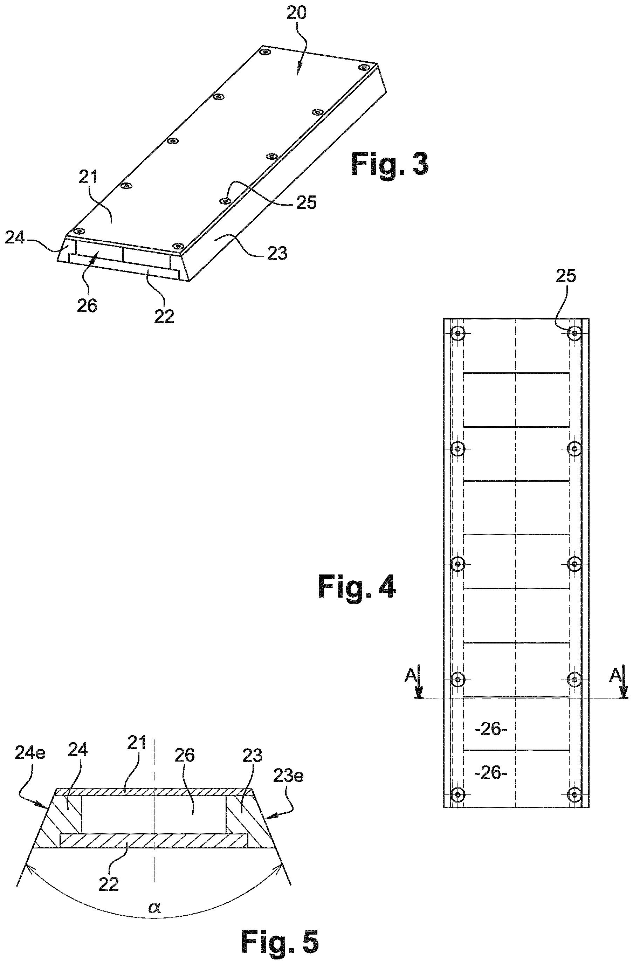

Selon le mode de réalisation illustré à la figure 1, la source de compensation 400 est formée par trois pavés de compensation 20, un tel pavé 20 est particulièrement illustré en détails aux figures 3, 4 et 5.

Selon un autre mode de réalisation de l'invention, la source de compensation 400 est formée par un unique pavé de compensation s'étendant sur toute la longueur du rotor. Toutefois, l'utilisation de plusieurs pavés de compensation 20 permet de faciliter la manipulation ainsi que le montage/démontage de la source de compensation.

Les pavés disposés entre les cornes polaires et introduits selon la direction axiale du rotor peuvent être positionnées de manière jointive ou à claire-voie de manière à réaliser une ventilation radiale.

L'utilisation de plusieurs pavés de compensation permet également de faciliter le montage/démontage de la source de compensation 400 lorsque la machine électrique est déjà montée (i.e. lorsque le rotor est assemblé dans le stator).

Tel qu'illustré sur les figures 3, 4 et 5, le pavé de compensation 20 est formé par :
- une plaque amagnétique inférieure 22 :
- une plaque amagnétique supérieure 21 ;
- deux cales latérales 23 et 24 en acier doux,
- et des aimants permanents 26 positionnés en sandwich entre les deux plaque amagnétiques 21 et 22.

Les plaques amagnétiques 21 et 22 et les cales latérales 23, 24 sont solidarisées par des moyens de vissage 25. Selon un autre mode de réalisation, les plaques amagnétiques 21 et 22 et les cales latérales 23, 24 sont solidarisées par rivetage ou encore par collage.

De façon avantageuse, les aimants permanents 26 sont des pavés élémentaires normalisés de dimensions courantes. L'utilisation de tels pavés élémentaires permet ainsi de réduire les coûts de production de la source de compensation 400.

Les aimants permanents 26 sont positionnés entre les deux plaques amagnétiques 21 et 22 en respectant les polarités des rotors. Un exemple de positionnement des aimant permanent 26 en fonction de la polarité des rotors est représenté sur le détail de la figure 2.

Les aimants 26 sont avantageusement collés sur les plaques amagnétiques 21, 22.

La dimension des aimants permanents 26, et plus particulièrement l'épaisseur des aimants 26, est adaptée en fonction du degré de compensation des fuites de flux magnétique désiré. Ainsi, il est possible de compenser entièrement ou seulement partiellement les fuites de flux magnétique au niveau du rotor, en fonction des souhaits et des besoins.

Les cales 23, 24 en acier doux, bordant latéralement le pavé de compensation 20, présentent respectivement une face externe 23e, 24e dont la géométrie est adaptée pour venir s'emboiter par glissement dans les rainures 31 qui sont agencées dans la partie périphérique des cornes polaires 2. Les faces externes 23e, 24e présentent un profil oblique par rapport à l'axe radial du rotor 100 et forment ainsi un angle d'ouverture a.

De façon avantageuse, l'angle d'ouverture α formé par les faces externes des deux cales est déterminé de manière à assurer le maintien en position des pavés de compensation 20 entre les cornes polaires 2 lors de la rotation du rotor 100. L'angle d'ouverture α est également dépendant du nombre de pôles saillants 10 sur le rotor.

A titre d'exemple, l'angle d'ouverture α illustré sur les figures pour un rotor comportant 12 pôles saillants est de l'ordre de 30°.

L'utilisation des cales 23, 24 en acier doux permet en outre de prolonger la corne polaire 2, la cale 23, 24 participant alors à la fonction des cornes polaires, partie intégrante de l'épanouissement polaire, c'est-à-dire l'amélioration de la forme d'onde d'induction dans l'entrefer de manière à minimiser le taux d'harmonique d'induction.

Le mode de réalisation qui vient d'être décrit permet avantageusement un montage et/ou un démontage rapide de la source de compensation 400 par glissement entre les cornes polaires 2 au niveau de l'espace inter-polaire 11. Les opérations de montage et de démontage de la source de compensation 400 sont alors possibles sur un rotor monté ou encore que sur une machine électrique montée (i.e. le rotor introduit dans le stator). Cette dernière possibilité permet en outre de s'affranchir de la problématique de montage d'un rotor équipé d'aimants permanents à l'intérieur d'un stator.

Selon un autre mode de réalisation simplifié de l'invention (non représenté), la source de compensation est formée par des aimants permanents 26 solidarisés sur une plaque support amagnétique. L'ensemble ainsi constitué peut être inséré par glissement dans des rainures prévues à cet effet dans les cornes polaires comme décrit précédemment.

Le mode de montage par glissement de la source de compensation 400 a également pour avantage d'améliorer la maintenance sur site. En effet, s'il était nécessaire de démonter le rotor pour maintenance, la source de compensation serait alors démontée en premier de manière à faciliter la sortie du rotor et bien entendu son remontage.

La source de compensation 400 est dimensionnée de manière à ce que la machine tournante puisse toujours fonctionner, dans un mode plus ou moins dégradé, sans la présence de cette source de compensation en place sur le rotor.

Selon un autre mode de réalisation de l'invention, la source de compensation 400 peut comporter des orifices ou des conduits aptes à permettre une circulation d'un fluide de refroidissement. Ainsi, lors de la rotation du rotor 100, l'air ambiant ou le fluide de refroidissement environnant s'engouffre dans l'espace inter-polaire 11 pour ressortir au niveau des orifices ou des conduits aménagés au niveau de la source de compensation. Il est également possible de disposer un ventilateur à l'entrée de cet espace 11 afin de créer un flux de circulation du fluide de refroidissement ou d'augmenter le flux de circulation naturelle créé par la rotation du rotor 100.

Selon un premier exemple de réalisation, les pavés de compensation peuvent comporter des orifices traversant, répartis avantageusement sur la longueur du rotor. Ces orifices permettent ainsi la circulation d'un fluide de refroidissement de façon radiale, de l'espace inter-polaire 11 vers l'extérieur du rotor 100 (i.e. vers l'entrefer et le stator de la machine tournante), améliorant ainsi le refroidissement des bobines inductrices et des bobinages statoriques.

Selon un deuxième exemple de réalisation, des conduits ou des orifices peuvent être agencés au niveau de la jonction des différents pavés de compensation par exemple par la création d'un espace entre deux pavés de compensation ou encore par la réalisation d'une encoche au niveau des extrémités longitudinales des pavés de compensation.

Ainsi, l'invention a pour objet la réalisation d'un rotor multipolaire, à pôles saillants, d'une machine électrique synchrone permettant par exemple d'améliorer le rendement de la machine tournante sans modification de son volume, ou encore d'améliorer la puissance fournie par rapport à une machine tournante conventionnelle (avec une densité de courant du rotor et une densité de flux identique).

Enfin, le rotor à pôles saillant selon l'invention permet un montage simple et rapide sans outillages spéciaux de la source complémentaire de compensation. La forme astucieuse des cornes polaires et de la source de compensation permet à la fois un montage rapide et facile et à la fois un maintien de la bobine inductrice lors de l'arrêt et lors de la rotation du rotor.

De plus, le rotor à pôles saillants selon l'invention peut également fonctionner en régime dégradé en cas d'absence de la source de compensation.

Il a été essentiellement décrit un rotor multipolaire à pôles saillants d'une machine électrique synchrone comportant des bobines inductrices comme source de force magnétomotrice ; toutefois, l'invention est également applicable à un rotor multipolaire à pôles saillants d'une machine électrique synchrone comportant une source de force magnétomotrice formée par des aimants permanents ou encore à une machine électrique synchrone comportant deux sources d'excitation magnétique formée par des aimants permanents et par des bobines inductrices.

## Revendications

1. Rotor d'une machine électrique synchrone multipolaire comportant une pluralité de pôles saillants (10), chacun comportant une paire de cornes polaires (2) situées de part et d'autre dudit pôle saillant (10), et une source de force magnétomotrice (3), réalisée par des bobines inductrices entourant chaque pôle saillant (10) et maintenues en position par lesdits cornes polaires (2), ladite source de force magnétomotrice (3) étant apte à générer un flux magnétique (Φ) apte à embrasser l'induit d'un stator, une partie (Φ_{f}) dudit flux magnétique (Φ) généré par ladite source de force magnétomotrice, dit flux de fuite, étant dispersée entre lesdits pôles saillants (10) dudit rotor (100) ;
ledit rotor étant **caractérisé en ce qu'**il comporte une source magnétique de compensation (400) apte à compenser lesdites fuites de flux magnétique (Φ_{f}) dispersées entre lesdits pôles saillants (10), ladite source de compensation comportant un aimant permanent (26) et étant dimensionnée de manière à compenser au moins une partie dudit flux de fuite , ladite source magnétique de compensation (400) étant montée de façon amovible entre deux cornes polaires (2) au niveau d'un espace inter-polaire (11), lesdites cornes polaires (2) comportant une rainure (31) dont la forme est adaptée pour recevoir par glissement ladite source de compensation (400).

2. Rotor d'une machine électrique synchrone multipolaire (100) selon la revendication précédente **caractérisé en ce que** lesdites rainures (31) sont continues le long desdits cornes polaires (2).

3. Rotor d'une machine électrique synchrone multipolaire (100) selon l'une des revendications 1 à 2 **caractérisé en ce que** ladite forme des rainures (31) et ladite forme complémentaire de ladite source de compensation (400) sont adaptées pour maintenir radialement ladite source de compensation (400) sous l'effet de la force centrifuge.

4. Rotor d'une machine électrique synchrone multipolaire (100) selon l'une des revendications 1 à 3 **caractérisé en ce que** ladite source magnétique de compensation (400) est formée par un pavé de compensation comportant au moins un aimant permanent, ledit pavé de compensation (20) étant positionné entre deux pôles saillants (10).

5. Rotor d'une machine électrique synchrone multipolaire (100) selon la revendication 4 **caractérisé en ce que** ledit pavé de compensation est formé par deux plaques amagnétiques (21, 22) agencées de part et d'autre dudit au moins un aimant permanent (26).

6. Rotor d'une machine électrique synchrone multipolaire (100) selon l'une des revendications 4 à 5 **caractérisé en ce que** ledit pavé de compensation comporte deux cales (23, 24) en acier doux bordant ledit au moins un aimant (26), la forme desdites cales (23, 24) étant aptes à venir coopérer avec les rainures (31) desdites cornes polaires (2).

7. Rotor d'une machine électrique synchrone multipolaire (100) selon l'une des revendications précédentes **caractérisé en ce que** ladite source magnétique de compensation (400) comporte au moins un conduit apte à permettre la circulation d'un fluide de refroidissement.

8. Rotor d'une machine électrique synchrone multipolaire (100) selon l'une des revendications 1 à 7 **caractérisé en ce qu'**il comporte une première source de force magnétomotrice réalisée par des bobines inductrices et une deuxième source de force magnétomotrice réalisée par des aimants permanents.

9. Machine électrique synchrone comportant un rotor (100) à pôles saillants (10) selon l'une des revendications précédentes.

## Patentansprüche

1. Rotor einer multipolaren, synchronen, elektrischen Maschine, umfassend eine Vielzahl von hervorstehenden Polen (10), von denen jeder ein polares Hörnerpaar (2) umfasst, die auf jeder Seite des genannten hervorstehenden Pols (10) angeordnet sind, und eine Quelle einer magnetomotorischen Kraft (3), die durch Induktanzspulen realisiert ist, welche jeden hervorstehenden Pol (10) umgeben und von den genannten polaren Hörnern (2) in Position gehalten werden, wobei die genannte magnetomotorische Kraft (3) geeignet ist, einen Magnetstrom (Φ) zu erzeugen, der geeignet ist, den Läufer eines Stators zu umfassen, wobei ein Teil (Φ₁) des genannten Magnetstroms (Φ), der durch die genannte Quelle einer magnetomotorischen Kraft erzeugt ist, bezeichnet als Streufluss, zwischen den genannten hervorstehenden Polen (10) des genannten Rotors (100) verstreut ist;
wobei der genannte Rotor **dadurch gekennzeichnet ist, dass** er eine magnetische Ausgleichsquelle (400) umfasst, die geeignet ist, die genannten magnetischen Streuflüsse (Φ_{f}) auszugleichen, die zwischen den genannten hervorstehenden Polen (10) verstreut sind, wobei die genannte Ausgleichsquelle einen Dauermagneten (26) umfasst und derart bemessen ist, dass wenigstens ein Teil des genannten Streuflusses ausgeglichen ist, wobei die genannte magnetische Ausgleichsquelle (400) derart montiert ist, dass sie zwischen zwei polaren Hörnern (2) an einem interpolaren Raum (11) abnehmbar ist, wobei die genannten polaren Hörner (2) eine Rille (31) umfassen, deren Form geeignet ist, um per Gleiten die genannte Ausgleichsquelle (400) zu empfangen.

2. Rotor einer multipolaren, synchronen, elektrischen Maschine (100) gemäß dem voranstehenden Anspruch, **dadurch gekennzeichnet, dass** die genannten Rillen (31) entlang den genannten polaren Hörnern (2) kontinuierlich sind.

3. Rotor einer multipolaren, synchronen, elektrischen Maschine (100) gemäß einem der Ansprüche 1 bis 2, **dadurch gekennzeichnet, dass** die genannte Form der Rillen (31) und die genannte komplementäre Form der genannten Ausgleichsquelle (400) geeignet sind, um die genannte Ausgleichsquelle (400) unter der Wirkung der Zentrifugalkraft radial zu halten.

4. Rotor einer multipolaren, synchronen, elektrischen Maschine (100) gemäß einem der Ansprüche 1 bis 3, **dadurch gekennzeichnet, dass** die genannte magnetische Ausgleichsquelle (400) durch einen Ausgleichsklotz gebildet ist, umfassend wenigstens einen Dauermagneten, wobei der genannte Ausgleichsklotz (20) zwischen zwei hervorstehenden Polen (10) positioniert ist.

5. Rotor einer multipolaren, synchronen, elektrischen Maschine (100) gemäß Anspruch 4, **dadurch gekennzeichnet, dass** der genannte Ausgleichsklotz durch zwei nicht magnetische Platten (21, 22) gebildet ist, die auf jeder Seite des genannten wenigstens einen Dauermagneten (26) angeordnet sind.

6. Rotor einer multipolaren, synchronen, elektrischen Maschine (100) gemäß einem der Ansprüche 4 bis 5, **dadurch gekennzeichnet, dass** der genannte Ausgleichsklotz zwei Keile (23, 24) aus Flussstahl umfasst, die den genannten wenigstens einen Magneten (26) säumen, wobei die Form der genannten Klötze (23, 24) geeignet ist, mit den Rillen (31) der genannten polaren Hörner (2) zusammenzuwirken.

7. Rotor einer multipolaren, synchronen, elektrischen Maschine (100) gemäß einem der voranstehenden Ansprüche, **dadurch gekennzeichnet, dass** die genannte magnetische Ausgleichsquelle (400) wenigstens einen Leiter umfasst, der geeignet ist, den Umlauf einer Kühlflüssigkeit zu erlauben.

8. Rotor einer multipolaren, synchronen, elektrischen Maschine (100) gemäß irgendeinem der Ansprüche 1 bis 7, **dadurch gekennzeichnet, dass** er eine erste Quelle einer magnetomotorischen Kraft umfasst, die durch Induktanzspulen realisiert ist, und eine zweite Quelle einer magnetomotorischen Kraft, die durch Dauermagneten realisiert ist.

9. Synchrone, elektrische Maschine, die einen Rotor (100) mit hervorstehenden Polen (10) gemäß einem der voranstehenden Ansprüche umfasst.

## Claims

1. A rotor of a multipolar synchronous electric machine including a plurality of salient poles (10), each salient pole (10) including a pair of pole tips (2) situated on either side of the said salient pole (10), and a source of magnetomotive force (3) realized by induction coils surrounding each salient pole (10) and held in position by said pole tips (2), said source of magnetomotive force (3) being suited to generate a magnetic flux (Φ) suited to encompass the armature of a stator, a part (Φ_{f}) of the said magnetic flux (Φ) generated by the said source of magnetomotive force, said leakage flux, being dispersed between the said salient poles (10) of the said rotor (100);
the said rotor being **characterized in that** it includes a magnetic compensation source (400) suited to compensate the said leakages of magnetic flux (Φ_{f}) dispersed between the said salient poles (10), the said compensation source including a permanent magnet (26) and being dimensioned so as to compensate at least a part of the said leakage flux; the said magnetic compensation source (400) being mounted in a detachable manner between two pole tips (2) at the level of an interpolar space (11), said pole tips (2) include a groove (31), the shape of which is adapted to receive, by sliding, the said compensation source (400).

2. The rotor of a multipolar synchronous electric machine (100) according to the preceding claim, **characterized in that** the said grooves (31) are continuous along the said pole tips (2).

3. The rotor of a multipolar synchronous electric machine (100) according to one of claims 1 to 2, **characterized in that** the said shape of the grooves (31) and the said complementary shape of the said compensation source (400) are adapted to maintain the said compensation source (400) radially under the effect of the centrifugal force.

4. The rotor of a multipolar synchronous electric machine (100) according to one of claims 1 to 3, **characterized in that** the said magnetic compensation source (400) is formed by a compensation block including at least one permanent magnet, the said compensation block (20) being positioned between two salient poles (10).

5. The rotor of a multipolar synchronous electric machine (100) according to claim 4, **characterized in that** the said compensation block is formed by two non-magnetic plates (21, 22) arranged on either side of the said at least one permanent magnet (26).

6. The rotor of a multipolar synchronous electric machine (100) according to one of claims 4 to 5, **characterized in that** the said compensation block includes two shims (23, 24) of mild steel bordering the said at least one magnet (26), the shape of the said shims (23, 24) being suited to cooperate with the grooves (31) of the said pole tips (2).

7. The rotor of a multipolar synchronous electric machine (100) according to one of the preceding claims, **characterized in that** the said magnetic compensation source (400) includes at least one duct suited to permit the circulation of a cooling fluid.

8. The rotor of a multipolar synchronous electric machine (100) according to one of claims 1 to 7, **characterized in that** it includes a first source of magnetomotive force realized by induction coils and a second source of magnetomotive force realized by permanent magnets.

9. A synchronous electric machine including a rotor (100) with salient poles (10) according to one of the preceding claims.
